# DEMANDE DE BREVET EUROPEEN

(11) **EP 4 529 088 A1**
(43) Date de publication de la demande: **26.03.2025**
(21) Numéro de dépôt: 23306572.1
(22) Date de dépôt: 21.09.2023
(51) Int. Cl.: H04L 9/40, H04W 12/06, H04W 12/02, H04W 12/084

(54) **PROCÉDÉ ET SYSTÈME D'AUTHENTIFICATION D'UN UTILISATEUR POUR ACCÉDER À UNE APPLICATION WEB HÉBERGÉE SUR UN SERVEUR D'APPLICATION**

(71) Demandeur: BULL SAS, 78340 Les Clayes-Sous-Bois (FR)
(72) Inventeur: GUIONNEAU, Christophe, 38000 Grenoble (FR)
(74) Mandataire: IPAZ

(57) **Abrégé**

L'invention concerne un procédé (100) d'authentification d'un utilisateur pour accéder à une application web, comprenant :
- réception, par un serveur d'application, d'une requête d'accès ;
- redirection (114) vers un serveur d'authentification IDAAS ;
- authentification (126) dudit utilisateur auprès d'un serveur d'authentification social sélectionné sur ledit serveur IDAAS,
- réception (128) par ledit serveur IDAAS de données personnelles dudit utilisateur,
-vérification (132) de données personnelles, et
- lorsque les données personnelles vérifient au moins une règle d'accès à l'application web, transmission (136) d'une preuve d'authentification autorisant l'accès dudit utilisateur à ladite application web.
Elle concerne également un programme d'ordinateur et un système d'authentification mettant en oeuvre un tel procédé.

## Description

La présente invention concerne un procédé d'authentification d'un utilisateur pour accéder à une application web sur un serveur d'application. Elle concerne également un programme d'ordinateur et un système mettant en oeuvre un tel procédé.

Le domaine de l'invention est le domaine de l'authentification d'un utilisateur en vue d'accéder à des applications web.

### État de la technique

L'accès à une application web, que ce soit au travers d'un navigateur Internet ou au travers d'une application cliente exécutée par un appareil utilisateur, par exemple de type Smartphone ou tablette, nécessite des données d'authentification, telles que par exemple un identifiant et un mot de passe. En plus de ces données d'authentification, l'accès à certaines applications est conditionné par des règles relatives au profil de l'utilisateur, c'est-à-dire à des données personnelles de l'utilisateur, tel que par exemple l'âge de l'utilisateur, la localisation de l'utilisateur, la nationalité de l'utilisateur, etc. Ainsi, l'utilisateur est amené à fournir des données personnelles lors de l'accès à ces applications ou lors de la création d'un compte utilisateur pour ces applications, ce qui pose des problèmes de confidentialité des données utilisateurs.

Une solution alternative est d'utiliser un service d'authentification tiers, appelé service d'authentification social, tel que FranceConnect ^{®}, un réseau social de type Facebook ^{®}, etc. L'utilisateur crée un compte auprès du service d'authentification sociale et fournit ses données personnelles. Puis, pour accéder telle ou telle application web, l'utilisateur s'authentifie auprès du service d'authentification tiers qui transmet alors les données personnelles de l'utilisateur à chaque application web à laquelle l'utilisateur souhaite accéder. Cela évite à l'utilisateur de saisir ses données personnelles auprès de chacune des applications, mais cela n'évite pas la communication de ses personnelles à chaque application web. Parfois, le service d'authentification sociale transmet même plus de données personnelles de l'utilisateur qu'il n'est nécessaire pour l'accès à l'application web. De plus, le service d'authentification social connaît l'application à laquelle l'utilisateur souhaite accéder et peut, potentiellement, suivre/traquer l'activité de l'utilisateur dans le temps et connaître toutes les applications auxquelles l'utilisateur accède. Cette solution présente, en plus du problème de confidentialité des données personnelles, un problème de confidentialité de l'activité de l'utilisateur.

Un but de la présente invention est de remédier à au moins un des inconvénients précités.

Un autre but de la présente invention est de proposer une solution d'authentification d'un utilisateur pour accéder à une application web, permettant une plus grande confidentialité des données personnelles de l'utilisateur.

Il est aussi un but de la présente invention de proposer une solution d'authentification d'un utilisateur pour accéder à une application web, permettant une plus grande confidentialité de l'activité de l'utilisateur.

### Exposé de l'invention

L'invention permet d'atteindre au moins l'un des buts précités par un procédé d'authentification d'un utilisateur pour accéder à une application web hébergée sur un serveur d'application, ledit procédé comprenant une phase d'authentification comprenant les étapes suivantes :
- réception, par ledit serveur d'application, d'une requête d'accès à ladite application web formulée par l'utilisateur au travers d'un appareil utilisateur ;
- redirection dudit utilisateur vers un premier serveur d'authentification, dit serveur IDAAS ;
- sélection, par ledit utilisateur et auprès dudit serveur IDAAS, d'un deuxième serveur d'authentification, dit serveur social, détenant des données personnelles de l'utilisateur ;
- authentification dudit utilisateur auprès dudit serveur d'authentification social sélectionné ;
- réception par ledit serveur IDAAS de données personnelles dudit utilisateur transmises par ledit serveur social ;
- vérification de données personnelles de l'utilisateur en fonction d'au moins une règle d'accès à ladite application web préalablement renseignée ; et
- lorsque les données personnelles vérifient l'au moins une règle d'accès, transmission dudit serveur IDAAS audit serveur d'application d'une preuve d'authentification autorisant l'accès dudit utilisateur à ladite application web.

En d'autres termes, l'invention propose de réaliser l'authentification d'un utilisateur en utilisant un serveur social, mais par l'intermédiaire d'un serveur IDAAS. Les données personnelles détenues par le serveur social sont transmises au serveur IDAAS, mais pas au serveur d'application. Le serveur IDAAS teste les données personnelles de l'utilisateur pour déterminer si ces données sont conformes aux règles d'accès à l'application, sans transmettre ces données personnelles au serveur d'application : le serveur d'application ne reçoit donc pas les personnelles détenues par le serveur social. Ainsi, l'invention permet une plus grande sécurisation des données personnelles, et un plus grand contrôle sur la dissémination, ou le partage, de ces données avec des serveurs d'application.

De plus, le serveur social ne reçoit aucune indication sur l'application à laquelle l'utilisateur souhaite accéder. Cette information n'est pas partagée par le serveur IDAAS avec le serveur social. Ainsi, du côté du serveur social, il n'est pas possible de connaître l'application à laquelle l'utilisateur souhaite accéder, ce qui permet une plus grande confidentialité pour l'utilisateur. De plus, dans ces conditions, il n'est pas possible, pour le serveur social, de suivre les applications auxquelles l'utilisateur accède dans le temps, ce qui permet plus grande confidentialité de l'activité de l'utilisateur dans le temps, comparée aux solutions actuelles.

Ainsi, comparée aux solutions actuelles, la solution d'authentification selon l'invention permet une plus grande confidentialité des données personnelles et de l'activité de l'utilisateur.

Une « application web » peut être un site Internet, ou une page Internet, hébergée sur un serveur d'application, et accessible au travers d'un navigateur Internet exécuté par l'appareil utilisateur.

Une « application web » peut être une application hébergée sur un serveur d'application et accédée grâce à un client d'application exécutée localement sur un appareil utilisateur, par exemple un Smartphone, une tablette, un ordinateur, etc.

Suivant des modes de réalisation, la preuve d'authentification peut comprendre un jeton d'authentification.

Le jeton d'authentification peut comprendre une donnée indiquant que les données personnelles de l'utilisateur satisfont la ou les règles d'accès à l'application web, qui ont été préalablement renseignées.

Suivant des modes de réalisation, le jeton d'authentification peut comprendre un identifiant temporaire attribué l'utilisateur par le serveur IDAAS.

Cet identifiant temporaire peut être utilisé pour l'accès de l'utilisateur à l'application web. Ainsi, l'utilisateur n'est pas obligé de fournir un identifiant personnel à l'application web, et utilise l'identifiant temporaire fourni par le serveur IDAAS. Cela permet une plus grande confidentialité lors de l'accès de l'utilisateur à l'application web.

Suivant des modes de réalisation, la preuve d'authentification peut comprendre au moins une donnée, dite de test, obtenue par test d'au moins donnée personnelle par rapport à au moins une règle d'accès.

Par exemple, lorsqu'une règle d'accès consiste en une condition d'âge, par exemple « âge>18 ans », la preuve d'authentification peut comprendre une donnée relative au test de cette règle sur l'âge de l'utilisateur, par exemple une donnée de type « âge OK » ou « âge>18 », sans indiquer l'âge de l'utilisateur. Bien entendu, cet exemple est donné à titre d'illustration seulement et n'est nullement limitatif.

L'au moins une donnée de test peut être transmise au serveur d'application sous la forme d'un jeton d'information.

Suivant des modes de réalisation, la phase d'authentification peut comprendre, avant l'étape de transmission d'au moins une donnée de test, une étape de demande de confirmation audit utilisateur.

Ainsi, l'utilisateur contrôle totalement les données communiquées par le serveur IDAAS au serveur d'application.

Suivant des modes de réalisation, le procédé selon l'invention peut comprendre, préalablement à la phase d'authentification, une étape d'enrôlement de l'application web audit serveur IDAAS, ladite étape d'enrôlement indiquant au moins une règle d'accès à ladite application.

En particulier, lorsque l'application web s'enrôle auprès du serveur IDAAS, elle indique la ou les règles applicables au profil d'un utilisateur, et donc aux données personnelles de l'utilisateur, conditionnant l'accès à ladite application.

Au moins une règle d'accès peut être relative à au moins une des données suivantes :
- âge de l'utilisateur. Par exemple une règle peut conditionner l'accès à l'application en fonction d'un âge minimum, par exemple un âge minimum de 18 ans. Une telle condition peut être définie pour différentes raisons, par exemple en fonction de la nature du contenu de l'application ;
- la localisation de l'utilisateur : par exemple une règle peut conditionner l'accès à l'application en fonction d'un pays ou d'une région, par exemple la France ou l'Europe. Une telle condition peut être définie pour différentes raisons, par exemple pour des questions de sécurité de données ou de protection contre le piratage ;
- une nationalité de l'utilisateur : par exemple une règle peut conditionner l'accès à l'application en fonction d'une nationalité de l'utilisateur, par exemple Français. Une telle condition peut être définie pour différentes raisons, par exemple pour des questions de droit d'accès ;
- etc.

Bien entendu ces exemples sont donnés à titre d'illustration seulement et ne sont nullement limitatifs.

Suivant des modes de réalisation, lors de l'étape d'enrôlement, d'autres données peuvent être fournies par l'application web.

Par exemple, l'application web peut fournir une URL de retour à utiliser lorsque le serveur IDAAS lui communique la preuve d'authentification, ou pour rediriger l'utilisateur vers l'application web lorsque la phase d'authentification est réalisée.

Suivant un exemple de réalisation nullement limitatif, l'application web fournit une combinaison quelconque des données suivantes :
- un nom d'application ;
- un descriptif dans plusieurs langues si nécessaire ;
- une URL principale de l'application ;
- une URL de retour d'authentification, également appelé callback URL dans le protocole OpenID Connect (OIDC), une URI pour une application lourde. Il peut y avoir plusieurs URL ou URI de retour ;
- un ou des paramètres cryptographiques et de flux OIDC de l'application cliente,
- un ou des types de données privées demandées parmi la liste des données possibles,
- une ou des règles d'accès relatives au profil de l'utilisateur, c'est-à-dire relatives aux données personnelles de l'utilisateur.
- etc.

Suivant des modes de réalisation, l'application web peut obtenir une ou plusieurs données à la fin de l'étape d'enrôlement.

Suivant un exemple de réalisation nullement limitatif, l'application web peut obtenir une combinaison quelque quelconque des données suivantes :
- un identifiant d'application, dit ClientID, par exemple un identifiant à utiliser dans un protocole OIDC (pour « OpenID Connect ») ;
- un secret, optionnellement qu'il peut modifier, par exemple un secret à utiliser dans un protocole OIDC ;
- une ou des URLs de redirection, par exemple une ou des URLs de redirection à utiliser dans un protocole OIDC.

Suivant des modes de réalisation du procédé selon l'invention, la phase d'authentification peut comprendre une étape de création d'un profil temporaire pour ledit utilisateur sur le serveur IDAAS.

Ainsi, l'utilisateur dispose d'un profil sur le serveur IDAAS, et au moins une partie des données traitées par le serveur IDAAS peuvent être mémorisées dans, ou en association avec, ledit profil utilisateur. Cela permet une plus grande sécurité pour ces données qui sont protégées dans le profil utilisateur temporaire associé à l'utilisateur.

Suivant des modes de réalisation, le procédé selon l'invention peut comprendre une étape de suppression du profil temporaire après la phase d'authentification.

Cela permet une plus grande confidentialité, à la fois des données personnelles de l'utilisateur, mais aussi de l'activité de l'utilisateur.

Ainsi, aucune donnée n'est conservée sur le serveur IDAAS en ce qui concerne l'application web, ni l'utilisateur, et plus généralement concernant l'authentification de l'utilisateur. En particulier, le serveur IDAAS ne conserve aucune donnée personnelle de l'utilisateur, ni aucune donnée relative à l'application web à laquelle l'utilisateur souhaite accéder. De préférence, toutes les données reçues, envoyées ou générées dans le cadre de l'authentification de l'utilisateur sont effacées.

La suppression du profil temporaire peut être réalisée dès la fin de la phase d'authentification, par exemple en même temps que, ou juste après, la transmission, par le serveur IDAAS au serveur d'application, de la preuve d'authentification.

Alternativement, la suppression du profil temporaire peut être réalisée après un laps de temps court, par exemple de quelques minutes, et en particulier de cinq(5) minutes, après la phase d'authentification.

Suivant des modes de réalisation, la sélection d'un serveur social peut être réalisée parmi plusieurs serveurs sociaux listés par le serveur IDAAS.

Ainsi, l'utilisateur dispose du choix du serveur social à utiliser.

Suivant des modes de réalisation, l'authentification de l'utilisateur auprès du serveur social peut être réalisée suivant toute technique d'authentification, par exemple en utilisant un identifiant et un mot de passe que l'utilisateur fournit au serveur social.

Lorsque le serveur IDAAS redirige l'utilisateur vers le serveur social, il peut indiquer au serveur social une URL de retour à utiliser lorsque l'authentification de l'utilisateur auprès du serveur social est terminée.

L'échange de données entre le serveur IDAAS et le serveur social peut être réalisé suivant toute technique connue.

Suivant des modes de réalisation, l'échange de données entre le serveur IDAAS et le serveur social peut être réalisée en utilisant une cinématique d'authentification OIDC, ou SAML (pour « Security Assertion Markup Language »), entre ledit serveur IDAAS et ledit serveur social.

En particulier, la ou les redirections entre le serveur IDAAS et le serveur social peu(ven)t être réalisée(s) en utilisant une cinématique d'authentification OIDC ou SAML entre ledit serveur IDAAS et ledit serveur social.

L'échange de données entre le serveur IDAAS et le serveur d'application peut être réalisé suivant toute technique connue.

Suivant des modes de réalisation, l'échange de données entre le serveur IDAAS et le serveur d'application peut être réalisé en utilisant une cinématique d'authentification OIDC, ou SAML, entre ledit serveur IDAAS et ledit serveur d'application.

En particulier, la ou les redirections entre le serveur IDAAS et le serveur d'application peu(ven)t être réalisée(s) en utilisant une cinématique d'authentification OIDC, ou SAML, entre ledit serveur IDAAS et ledit serveur social.

Suivant des modes de réalisation, le procédé selon l'invention peut comprendre une étape de création d'un compte utilisateur sur le serveur d'application, après la phase d'authentification.

Ainsi, lors d'une prochaine connexion, l'utilisateur peut accéder à l'application en utilisant ce compte utilisateur, et peut se passer d'une authentification selon la présente invention.

Suivant des modes de réalisation, les données personnelles peuvent comprendre au moins une des données suivantes :
- âge de l'utilisateur,
- localisation de l'utilisateur,
- nationalité de l'utilisateur,
- etc.

Bien entendu ces exemples sont donnés à titre d'illustration seulement et ne sont nullement limitatifs.

Suivant un autre aspect de la présente invention, il est proposé un programme d'ordinateur non-transitoire comprenant des instructions informatiques, qui lorsqu'elles sont exécutées, mettent en oeuvre les étapes du procédé d'authentification selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes communicants ensemble.

En particulier, le programme d'ordinateur peut comprendre :
- un premier client d'authentification pour la gestion d'accès à une application web, en particulier installé sur un serveur d'application,
- un deuxième client d'authentification as a service installé sur un serveur IDAAS, et
- un troisième client d'authentification, dit client d'authentification social, en particulier installé sur un serveur d'authentification social ;

Suivant un autre aspect de la présente invention, il est proposé un système comprenant :
- un premier client d'authentification pour la gestion d'accès à une application web, en particulier installé sur un serveur d'application,
- un deuxième client d'authentification as a service installé sur un serveur IDAAS, et
- un troisième client d'authentification, dit client d'authentification social, en particulier installé sur un serveur d'authentification social ;
configurés pour mettre en oeuvre le procédé selon l'invention.

Le système selon l'invention peut comprendre, en termes de moyen(s) technique(s), et/ou de configuration, et/ou de programme d'ordinateur, une combinaison quelconque des caractéristiques optionnelles décrites plus haut en référence au procédé selon l'invention et qui ne sont pas reprises ici par soucis de concision.

Le système selon l'invention peut comprendre le serveur d'application.

Le système selon l'invention peut comprendre le serveur IDAAS.

Le système selon l'invention peut comprendre le serveur social.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé d'authentification selon l'invention ; et
- la FIGURE 2 est une représentation schématique d'un exemple de réalisation non limitatif d'un système d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

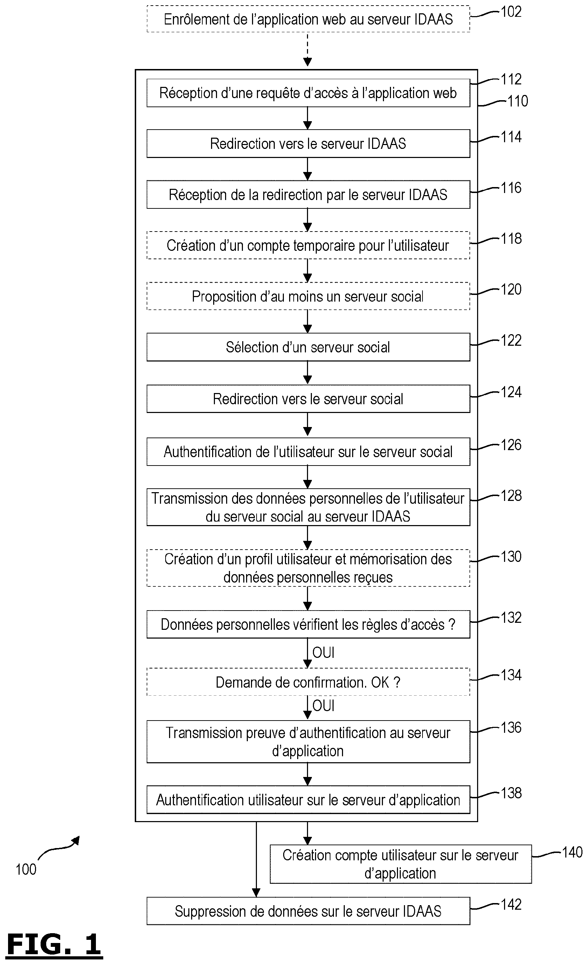

La FIGURE 1 est une représentation schématique d'un exemple de réalisation non limitatif d'un procédé d'authentification selon l'invention.

**Le** procédé 100, représenté sur la FIGURE 1, peut être mis en oeuvre pour authentifier un utilisateur en vue d'accéder à une application web, soit au travers d'un navigateur web exécuté par un appareil utilisateur, soit au travers d'un client d'application exécuté par ledit appareil utilisateur.

L'appareil utilisateur peut être de tout type, tels qu'un Smartphone, une tablette, un ordinateur, etc.

L'application web peut être de tout type, tel qu'un site Internet, une page Internet, une application de messagerie, une application bureautique, un service de streaming de musique, un service de streaming de contenus vidéo, etc.

Le procédé 100 peut comprendre une étape optionnelle 102 d'enrôlement de l'application web auprès d'un serveur IDAAS, pour pouvoir proposer, à ses utilisateurs, une authentification selon la présente invention. Cette étape d'enrôlement 102 est optionnelle car elle peut être réalisée en amont et peut ne pas faire du procédé selon l'invention pour au moins un utilisateur.

Pour s'enrôler, l'application web peut fournir une combinaison quelconque des données suivantes :
- un nom d'application ;
- un descriptif dans plusieurs langues si nécessaire ;
- une URL principale de l'application ;
- une URL de retour d'authentification, également appelé callback URL dans le protocole OpenID Connect, une URI pour une application lourde. Il peut y avoir plusieurs URL ou URI de retour ;
- un ou des paramètres cryptographiques et de flux OIDC de l'application cliente,
- un ou des types de données privées demandées parmi la liste des données possibles,
- au moins une règle d'accès relative au profil de l'utilisateur, c'est-à-dire relative aux données personnelles de l'utilisateur.
- etc.

Pendant, en réponse à l'enrôlement, l'application web peut obtenir une combinaison quelque quelconque des données suivantes :
- un identifiant d'application, dit ClientID ;
- un secret, optionnellement qu'il peut modifier, ;
- une ou des URLs de redirection.

A la fin de l'étape d'enrôlement, l'application peut proposer à chaque utilisateur souhaitant accéder à l'application, une authentification en passant par le serveur IDAAS.

L'étape d'enrôlement peut être initiée et réalisée par un administrateur ou un propriétaire de l'application web, un administrateur ou un propriétaire du serveur d'application hébergeant l'application web, etc.

L'étape d'enrôlement peut être réalisée bien avant une requête d'accès à l'application web, et peut être complètement décorrélée dans le temps d'une requête d'accès à l'application web.

Le procédé 100 comprend une phase d'authentification 110.

La phase d'authentification 110 comprend une étape 112 de réception d'une requête d'accès à l'application web qui est déjà enrôlée. Cette requête est reçue par le serveur d'application.

Une telle requête d'accès peut se présenter sous toute forme. Par exemple, la requête d'accès peut être la saisie d'une URL d'accès à l'application web dans un navigateur exécuté par l'appareil utilisateur, ou un lancement d'un client d'application exécuté sur l'appareil utilisateur.

Suite à la réception de la requête d'accès, le serveur d'application redirige l'utilisateur vers le serveur IDAAS, lors d'une étape 114. En d'autres termes, la requête d'accès est redirigée par le serveur d'application vers le serveur IDAAS. Cette redirection comprend au moins un identifiant de l'application web, à savoir le CilentID, obtenu lors de l'étape d'enrôlement. Suivant un exemple de réalisation, la redirection est réalisée de manière automatisée. Suivant un autre exemple de réalisation, une page de l'application web, ou un message, peut inviter l'utilisateur à choisir le mode d'authentification : une authentification classique, ou une authentification par l'intermédiaire du serveur IDAAS. La redirection est réalisée lorsque l'utilisateur choisit une authentification par l'intermédiaire du serveur IDAAS.

Suivant des modes de réalisation, cette redirection est réalisée selon la cinématique du protocole OIDC (« OpenID Connect ») ou du protocole SAML (« Security Assertion Markup Language »).

Lors d'une étape 116 de la phase d'authentification 110, le serveur IDAAS reçoit la redirection et identifie l'application web grâce à l'identifiant de ladite application web contenu dans le message de redirection.

Lors d'une étape 118 la phase d'authentification 110, un compte temporaire est créé par le serveur pour héberger les données relatives à l'authentification de l'utilisateur pour l'application web. Un identifiant temporaire est attribué à l'utilisateur.

Lors d'une étape 120, optionnelle, de la phase d'authentification 110, le serveur IDAAS affiche une page Internet ou un message, proposant à l'utilisateur au moins un serveur/service d'authentification tiers, appelé serveur/service d'authentification social. Un tel service/serveur d'authentification peut par exemple être FranceConnect ^{®}, un réseau social de type Facebook ^{®}, Google ^{®}, etc. Alternativement, le serveur IDAAS peut proposer qu'un seul service d'authentification sociale.

La phase d'authentification 110 comprend une étape 122 lors de laquelle l'utilisateur sélectionne un service/serveur d'authentification sociale auprès duquel il détient un compte et qui détient des données personnelles de l'utilisateur. Par exemple, l'utilisateur sélectionne un service d'authentification sociale parmi plusieurs services d'authentification sociales, ou par confirmation du seul service d'authentification sociale proposé par l'IDAAS.

Cette étape 122 est réalisée car le serveur IDAAS ne connaît pas l'utilisateur et ne peut donc pas savoir sur quel serveur social l'utilisateur possède un compte utilisateur.

Lors d'une étape 124 de la phase d'authentification 110, le serveur IDAAS redirige l'utilisateur vers le serveur associé au service d'authentification social choisi, également appelé serveur d'authentification social ou serveur social. En d'autres termes, l'utilisateur est redirigé vers une URL du serveur social connue de l'IDAAS.

Cette redirection peut comprendre au moins un identifiant du serveur IDAAS. Cette redirection peut comprendre au moins une des données suivantes :
- au moins une adresse URL de retour, callback URL, permettant au serveur social de transmettre au serveur IDAAS les données personnelles de l'utilisateur qui sont connues du serveur social, dans le cas où l'utilisateur s'authentifie avec succès auprès dudit serveur social ;
- un identifiant temporaire de l'utilisateur ou un identifiant de transaction ;
- éventuellement, une liste de données personnelles demandées par le serveur IDAAS, cette liste de données étant préalablement définie par l'application web à laquelle l'utilisateur souhaite accéder, par exemple lors de l'étape d'enrôlement ;
- etc.
Cette redirection peut comprendre d'autres données que celles mentionnées ci-dessus.

Suivant des modes de réalisation, cette redirection est réalisée selon la cinématique du protocole OIDC (« OpenID Connect ») ou du protocole SAML (« Security Assertion Markup Language »).

Lors d'une étape 126 de la phase d'authentification 110, l'utilisateur s'authentifie auprès du serveur social, par toute technique d'authentification, par exemple en fournissant un identifiant et un mot de passe, ou par une authentification multifactorielle, etc.

Lorsque l'utilisateur s'authentifie avec succès auprès du serveur social, les données personnelles de l'utilisateur, détenues par le serveur social, sont transmises par le serveur social au serveur IDAAS, lors d'une étape 128 de la phase d'authentification 110. Ces données sont transmises au serveur IDAAS par exemple sous la forme d'au moins un jeton OAuth, de type 'jeton d'accès', 'jeton de rafraichissement' et 'jeton d'information'.

Optionnellement, lors d'une étape 130, le serveur IDAAS crée un profil temporaire pour l'utilisateur, optionnellement attaché au compte temporaire éventuellement créé lors de l'étape 118. Les données personnelles reçues sont mémorisées dans le profil temporaire.

Lors d'une étape 132, le serveur IDAAS détermine si les données personnelles reçues vérifient l'au moins une règle d'accès à l'application web, ladite au moins une règle étant renseignée lors de l'enrôlement de l'application web au serveur IDAAS.

Si ce n'est pas le cas, il est mis fin au procédé 100.

Si c'est le cas, la phase d'authentification 110 continue.

Lors d'une étape optionnelle 134 de la phase d'authentification 110, le serveur IDAAS demande confirmation à l'utilisateur concernant les informations qu'il s'apprête à communiquer au serveur d'application. Si l'utilisateur n'est pas d'accord il est mis au procédé 100. Sinon, le procédé 100 continue.

Lors d'une étape 136 de la phase d'authentification 110, le serveur IDAAS transmet au serveur d'application l'identifiant temporaire de l'utilisateur et une preuve d'authentification dudit utilisateur.

Suivant un exemple de réalisation, la preuve d'authentification peut comprendre un jeton d'authentification indiquant que les données personnelles de l'utilisateur satisfont la ou les règles d'accès à l'application web.

Optionnellement, la preuve d'authentification peut comprendre au moins une donnée, dite de test, obtenue par test d'au moins donnée personnelle par rapport à au moins une règle d'accès. Par exemple, lorsqu'une règle d'accès consiste en une condition d'âge, par exemple âge>18 ans, la preuve d'authentification peut comprendre une donnée relative au test de cette règle sur l'âge de l'utilisateur, par exemple une donnée de type « âge OK » ou « âge>18 », sans indication de l'âge exact de l'utilisateur. Bien entendu, cet exemple est donné à titre d'illustration seulement et n'est nullement limitatif.

L'au moins une donnée de test peut être transmise au serveur d'application sous la forme d'un jeton d'information.

Lors d'une étape 138 de la phase d'authentification 110, l'utilisateur est authentifié sur le serveur d'application avec son identifiant temporaire et la preuve d'authentification. Il peut accéder à l'application web.

La phase d'authentification 110 est terminée.

Dans l'exemple de la FIGURE 1, le procédé 100 peut comprendre après la phase d'authentification 110, une étape 140 de création d'un compte utilisateur auprès du serveur d'application pour accéder à l'application web. Ainsi, lors d'une prochaine connexion, l'utilisateur peut accéder à l'application web en utilisant ce compte utilisateur, et peut se passer d'une authentification impliquant le serveur IDAAS et/ou un serveur social.

Dans l'exemple de la FIGURE 1, le procédé 100 peut comprendre après la phase d'authentification, une étape 142 de suppression du profil utilisateur, de son identifiant temporaire, et le cas échéant de son compte temporaire.

De préférence, lors de l'étape 142 toutes les données manipulées par le serveur IDAAS sont supprimées de sorte à ne laisser aucune trace de l'utilisateur et de l'application web, du serveur social, etc. Cette étape 142 de suppression peut être réalisée juste après la fin de la phase de d'authentification 110. Alternativement, cette étape 142 de suppression peut être réalisée après une durée courte prédéterminée, par exemple de 5 minutes, suivant la fin de la phase d'authentification 110.

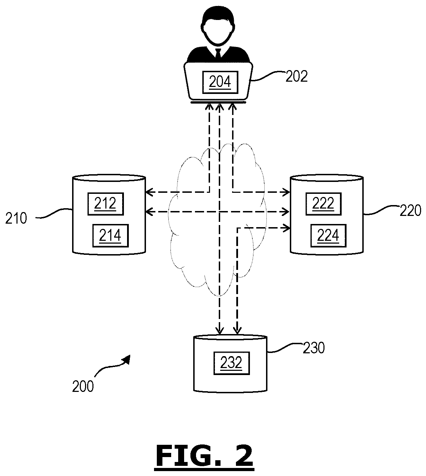

La FIGURE 2 est une représentation schématique d'un exemple de réalisation non limitatif d'un système d'authentification selon l'invention.

Le système 200, représenté sur la FIGURE 2, peut être utilisé pour mettre en oeuvre tout procédé selon l'invention, et en particulier le procédé 100 de la FIGURE 1.

Plus précisément, le système 200 peut être utilisé pour authentifier un utilisateur souhaitant, avec un appareil utilisateur 202 exécutant un client d'accès 204, à accéder à une application web. Le client d'accès 204 peut être un navigateur web exécuté par l'appareil utilisateur 202, ou un client d'application installée sur l'appareil utilisateur et exécuté par ledit appareil utilisateur 202.

Le système 200 comprend un serveur d'application 210 hébergeant au moins une application web 212 à laquelle l'utilisateur souhaite accéder. L'application web 212 peut être tout type d'application. L'application web 212 peut être un site Internet, une application bancaire, une application bureautique, etc.

Le serveur d'application 210 comprend un client d'authentification 214 réalisant une authentification des utilisateurs souhaitant accéder à l'application web 212. Le client d'authentification 214 peut être de toute nature. Suivant un exemple de réalisation non limitatif, le client d'authentification 214 peut être configuré pour réaliser une authentification selon le protocole OIDC ou le protocole SAML.

Le système 200 comprend un serveur IDAAS 220.

Le serveur IDAAS 220 comprend un client d'enrôlement 222 permettant à une application web de s'enrôler auprès dudit serveur IDAAS.

Le serveur IDAAS 220 comprend un client d'authentification 224 réalisant une authentification des utilisateurs souhaitant accéder à l'application web 212. Le client d'authentification 224 peut être de toute nature. Suivant un exemple de réalisation non limitatif, le client d'authentification 224 peut être configuré pour réaliser une authentification selon le protocole OIDC ou le protocole SAML.

Le système 200 comprend un serveur d'authentification social, également appelé serveur social, 230. Le serveur social 230 comprend un client d'authentification 232 réalisant une authentification d'un utilisateur ayant un profil, ou un compte, utilisateur sur ledit serveur social 230. Le client d'authentification réalise une authentification d'un utilisateur selon toute technique connue, par exemple par identifiant et mot de passe, une authentification à multi facteurs, etc.

L'appareil utilisateur 202, le serveur d'application 210, le serveur IDAAS et le serveur social peuvent se trouver sur des sites différents, et distants les uns des autres.

Au moins deux de ces équipements, à savoir l'appareil utilisateur 202, le serveur d'application 210, le serveur IDAAS et le serveur social 230, peuvent se trouver sur un même site.

Au moins deux de ces équipements, à savoir l'appareil utilisateur 202, le serveur d'application 210, le serveur IDAAS et le serveur social 230, peuvent communiquer entre eux au travers d'une connexion filaire ou d'une connexion sans fil.

Au moins deux de ces équipements, à savoir l'appareil utilisateur 202, le serveur d'application 210, le serveur IDAAS et le serveur social 230, peuvent communiquer entre eux au travers d'un réseau de communication, par exemple de type Internet.

Les exemples donnés ont été décrits avec un seul utilisateur. Bien entendu, l'invention peut être mise en oeuvre pour l'authentification de plusieurs utilisateurs.

Les exemples donnés ont été décrits avec une application web. Bien entendu, l'invention peut être mise en oeuvre pour l'authentification d'utilisateur(s) pour plusieurs applications hébergées sur un même serveur d'application ou sur différents serveurs d'application.

Dans les exemples décrits, le serveur d'application héberge une seule application web. Bien entendu, le serveur d'application peut héberger plusieurs applications web.

De manière générale, l'invention n'est pas limitée aux exemples décrits qui sont donnés à titre d'illustration. De nombreuses variantes peuvent être imaginées aux exemples donnés ci-dessus sans sortir du cadre de l'invention telle que définie dans les revendications principales.

## Revendications

1. Procédé (100) d'authentification d'un utilisateur pour accéder à une application web (212) hébergée sur un serveur d'application (210), ledit procédé (100) comprenant une phase d'authentification (210) comprenant les étapes suivantes :
- réception (212), par ledit serveur d'application (210), d'une requête d'accès à ladite application web (212) formulée par l'utilisateur au travers d'un appareil utilisateur (202) ;
- redirection (114) dudit utilisateur vers un premier serveur d'authentification (220), dit serveur IDAAS ;
- sélection (122), par ledit utilisateur et auprès dudit serveur IDAAS (220), d'un deuxième serveur d'authentification (230), dit serveur social, détenant des données personnelles de l'utilisateur ;
- authentification (126) dudit utilisateur auprès dudit serveur d'authentification social (230) sélectionné ;
- réception (128) par ledit serveur IDAAS (220) de données personnelles dudit utilisateur transmises par ledit serveur social ;
- vérification (132) de données personnelles de l'utilisateur en fonction d'au moins une règle d'accès à ladite application web (212) préalablement renseignée, et
- lorsque les données personnelles vérifient l'au moins une règle d'accès, transmission (136) dudit serveur IDAAS (220) audit serveur d'application (210) d'une preuve d'authentification autorisant l'accès dudit utilisateur à ladite application web (212).

2. Procédé (100) selon la revendication précédente, **caractérisé en ce que** la preuve d'authentification comprend un jeton d'authentification comprenant un identifiant temporaire attribué audit utilisateur par le serveur IDAAS (220).

3. Procédé (100) selon l'une quelconque des revendications précédentes, **caractérisé en ce que** la preuve d'authentification comprend au moins une donnée, dite de test, obtenue par test d'au moins donnée personnelle par rapport à au moins une règle d'accès.

4. Procédé (100) selon la revendication précédente, **caractérisé en ce que** la phase d'authentification (110) comprend, avant l'étape (136) de transmission d'au moins donnée de test, une étape (134) de demande de confirmation audit utilisateur.

5. Procédé (100) selon l'une quelconque des revendications précédentes, **caractérisé en ce qu'**il comprend, préalablement à la phase d'authentification (110), une étape (102) d'enrôlement de l'application web (212) audit serveur IDAAS (220), ladite étape d'enrôlement (102) indiquant au moins une règle d'accès à ladite application web (214).

6. Procédé (100) selon la revendication précédente, **caractérisé en ce que** :
- la phase d'authentification (110) comprend une étape (130) de création d'un profil temporaire pour ledit utilisateur sur le serveur IDAAS (220), et
- ledit procédé (110) comprenant une étape (142) de suppression dudit profil temporaire après la phase d'authentification (110).

7. Procédé (100) selon l'une quelconque des revendications précédentes, **caractérisé en ce que** la sélection d'un serveur social (230) est réalisé parmi plusieurs serveurs sociaux listés par le serveur IDAAS (220).

8. Procédé (100) selon l'une quelconque des revendications précédentes, **caractérisé en ce que** l'échange de données entre le serveur IDAAS (220) et le serveur social (230) est réalisé en utilisant une cinématique d'authentification OIDC ou SAML entre ledit serveur IDAAS (220) et ledit serveur social (230).

9. Procédé (100) selon l'une quelconque des revendications précédentes, **caractérisé en ce que** l'échange de données entre le serveur IDAAS (220) et le serveur d'application (210) est réalisé en utilisant une cinématique d'authentification OIDC ou SAML entre ledit serveur IDAAS (220) et ledit serveur d'application (210).

10. Procédé (100) selon l'une quelconque des revendications précédentes, **caractérisé en ce qu'**il comprend une étape (140) de création d'un compte utilisateur sur le serveur d'application (210), après la phase d'authentification.

11. Procédé (100) selon l'une quelconque des revendications précédentes, **caractérisé en ce que** les données personnelles peuvent comprendre au moins une des données suivantes :
- âge de l'utilisateur,
- la localisation de l'utilisateur,
- une nationalité de l'utilisateur,
- etc.

12. Programme d'ordinateur non transitoire comprenant des instructions informatiques, qui lorsqu'elles sont exécutées, mettent en oeuvre le procédé (100) selon l'une quelconque des revendications précédentes.

13. Système (300) d'authentification d'un utilisateur, comprenant :
- un premier client d'authentification (214), pour la gestion d'accès à une application web, en particulier installé sur un serveur d'application (210),
- un deuxième client d'authentification (224) as a service, installé sur un serveur IDAAS (220), et
- un troisième client d'authentification (232), dit client d'authentification social, en particulier installé sur un serveur d'authentification social (230) ;
configurés pour mettre en oeuvre le procédé (100) selon l'une quelconque des revendications 1 à 11.
